# EUROPÄISCHE PATENTSCHRIFT

(11) **EP 3 433 515 B1**
(45) Veröffentlichungstag und Bekanntmachung des Hinweises auf die Patenterteilung: **09.08.2023**
(21) Anmeldenummer: 17713617.3
(22) Anmeldetag: 23.03.2017
(51) Int. Cl.: F16J 15/3216, F16J 15/322, F16J 15/3228, F16J 15/3252, F16J 15/328, F16J 15/3232

(54) **DICHTUNGSANORDNUNG UND VERFAHREN ZUR HERSTELLUNG EINER DICHTUNGSANORDNUNG**
SEALING ARRANGEMENT AND METHOD FOR PRODUCING A SEALING ARRANGEMENT
DISPOSITIF D'ÉTANCHÉITÉ ET PROCÉDÉ DE FABRICATION D'UN DISPOSITIF D'ÉTANCHÉITÉ

(30) Priorität: 24.03.2016 DE 102016205057
(43) Veröffentlichungstag der Anmeldung: 30.01.2019
(73) Patentinhaber: ElringKlinger AG, 72581 Dettingen (DE); Elringklinger Kunststofftechnik GmbH, 74321 Bietigheim-Bissingen (DE)
(72) Erfinder: KOCH, Uwe, 72124 Pliezhausen (DE)
(74) Vertreter: DTS Patent- und Rechtsanwälte Schnekenbühl und Partner mbB
(86) Internationale Anmeldenummer: PCT/EP2017/057013
(87) Internationale Veröffentlichungsnummer: WO 2017/162837

(56) Entgegenhaltungen:
- EP-A1- 1 612 460
- EP-A2- 1 004 801
- US-A- 4 623 153

## Beschreibung

Die vorliegende Erfindung betrifft eine Dichtungsanordnung, insbesondere einen Radialwellendichtring. Ein solcher Radialwellendichtring dient insbesondere der Abdichtung zwischen zwei Räumen im Bereich einer beispielsweise rotierenden Welle.

Dichtungsanordnungen, insbesondere Radialwellendichtringe, sind aus der EP 1 004 801 A2, der EP 1 612 460 A1 und der US 4,623,153 bekannt.

Der vorliegenden Erfindung liegt die Aufgabe zugrunde, eine Dichtungsanordnung bereitzustellen, welche modular aufgebaut und flexibel einsetzbar ist.

Diese Aufgabe wird erfindungsgemäß durch eine Dichtungsanordnung zur Abdichtung zwischen zwei Aufnahmeräumen zur Aufnahme zweier Medien im Bereich einer Welle mit den Merkmalen des Anspruchs 1 gelöst.

Dadurch, dass bei der erfindungsgemäßen Dichtungsanordnung ein von dem Trägerelement verschiedenes Formgebungselement vorgesehen ist, kann das Trägerelement vorzugsweise ein für eine Vielzahl unterschiedlicher Dichtungsanordnungen vorgesehenes Standardbauteil sein, wobei zur Anpassung an unterschiedliche Anforderungen unterschiedlicher Dichtungsanordnungen Formgebungselemente und/oder Dichtelemente unterschiedlicher Art und/oder Form verwendet werden können.

Günstig kann es sein, wenn die Dichtungsanordnung mehrere Dichtelemente und/oder mehrere Formgebungselemente, insbesondere mehrere Dichtelemente mit jeweils einem Formgebungselement oder auch teilweise ohne Formgebungselement, umfasst.

Ein Dichtelement und/oder ein Formgebungselement ist vorzugsweise abschnittsweise oder im Wesentlichen vollständig ringscheibenförmig, insbesondere kreisringscheibenförmig, ausgebildet.

Vorteilhaft kann es sein, wenn das Dichtelement, das Trägerelement, das Formgebungselement und/oder die gesamte Dichtungsanordnung rotationssymmetrisch um eine gemeinsame Achse ausgebildet sind, wobei die gemeinsame Achse insbesondere eine Längsmittelachse, Symmetrieachse und/oder Rotationsachse der Welle ist.

Nachfolgend wird auf eine radiale Richtung und eine axiale Richtung Bezug genommen. Diese Richtungen beziehen sich vorzugsweise auf eine Längsmittelachse und/oder Rotationsachse der Welle und/oder auf eine gemeinsame Achse, insbesondere Symmetrieachse, des Dichtelements, des Trägerelements, des Formgebungselements und/oder der gesamten Dichtungsanordnung.

Ein Dichtelement ist beispielsweise als ein Dichtlippenelement ausgebildet.

Bei einer Ausgestaltung der Erfindung kann vorgesehen sein, dass das Formgebungselement das Dichtelement zumindest abschnittsweise an einer in radialer Richtung innenliegenden Seite des Dichtelements umgreift.

Günstig kann es sein, wenn das Formgebungselement einen ringscheibenförmigen Abschnitt und einen schräg hierzu verlaufenden Abschnitt, insbesondere einen kegelstumpfmantelförmigen Abschnitt, umfasst. Der schräg verlaufende Abschnitt schließt sich vorzugsweise in radialer Richtung nach innen an den ringscheibenförmigen Abschnitt an.

Unter dem Begriff "schräg" ist in dieser Beschreibung und den beigefügten Ansprüchen insbesondere eine Erstreckung derart zu verstehen, dass mit der axialen Richtung und mit der radialen Richtung weder ein Winkel von 0° noch von 90° eingeschlossen wird.

Günstig kann es sein, wenn das Dichtelement im montierten Zustand der Dichtungsanordnung an einer in radialer Richtung außenliegenden Seite des schräg verlaufenden Abschnitts des Formgebungselements anliegt.

Vorzugsweise ist das Dichtelement mittels des schräg verlaufenden Abschnitts des Formgebungselements umgeformt, elastisch verformt und/oder vorgespannt.

Das Dichtelement ragt vorzugsweise in radialer Richtung weiter nach innen als das Formgebungselement.

Insbesondere endet das Formgebungselement in einem Abstand größer Null von einer Oberfläche der Welle.

Das Formgebungselement ist beispielsweise aus einem metallischen Material gebildet.

Das Formgebungselement kann beispielsweise als ein Ziehteil ausgebildet sein, welches insbesondere nach einem Ziehvorgang keine weitere Bearbeitung erfährt. Alternativ hierzu kann vorgesehen sein, dass das Formgebungselement als ein Drehteil ausgebildet ist.

Das Dichtelement ist beispielsweise aus einem Kunststoffmaterial, insbesondere einem PTFE-Material, gebildet.

Erfindungsgemäß ist vorgesehen, dass das Trägerelement einen hohlzylindrischen Aufnahmeabschnitt zur Aufnahme des Dichtelements und des Formgebungselements und einen Anlageabschnitt umfasst, welcher in axialer Richtung einseitig oder zweiseitig an den Aufnahmeabschnitt angrenzt und sich ausgehend von dem Aufnahmeabschnitt in radialer Richtung nach innen erstreckt.

Der eine Anlageabschnitt ist vorzugsweise ringscheibenförmig, insbesondere kreisringscheibenförmig, ausgebildet.

Das Formgebungselement und das Dichtelement sind vorzugsweise mittels des Trägerelements in einer axialen Richtung fest miteinander verbunden.

Erfindungsgemäß ist vorgesehen, dass die Dichtungsanordnung eine oder mehrere Klemmscheiben, insbesondere Klemmringscheiben, zur Positionierung, Stabilisierung und/oder Festlegung des Dichtelements und/oder des Trägerelements umfasst.

Ein Sekundärdichtelement kann beispielsweise aus einem Elastomermaterial gebildet sein.

Vorzugsweise dient das Sekundärdichtelement einer Abdichtung im Bereich des hohlzylindrischen Aufnahmeabschnitts des Trägerelements.

Es kann vorgesehen sein, dass eine Dichtungsanordnung ein Trägerelement, ein Formgebungselement, ein Dichtelement, zwei Sekundärdichtelemente und zwei Klemmscheiben umfasst.

Ausgehend von einem Anlageabschnitt des Trägerelements sind diese Bauteile in axialer Richtung vorzugsweise in folgender Reihenfolge angeordnet: 1. das Formgebungselement, 2. das Dichtelement, 3. ein Sekundärdichtelement, 4. eine Klemmscheibe, 5. ein Sekundärdichtelement und 6. eine weitere Klemmscheibe.

Durch Umformen des Trägerelements kann ein weiterer Anlageabschnitt gebildet werden, insbesondere um die genannten Bauteile in axialer Richtung in Richtung des ersten Anlageabschnitts zu verklemmen.

Alternativ zu der vorstehend beschriebenen Dichtungsanordnung kann vorgesehen sein, dass zwei Formgebungselemente, zwei Dichtelemente, zwei Klemmscheiben und ein Sekundärdichtelement vorgesehen sind, wobei die Bauteile vorzugsweise ausgehend von einem Anlageabschnitt des Trägerelements in axialer Richtung in folgender Reihenfolge vorgesehen sind: 1. ein Formgebungselement, 2. ein Dichtelement, 3. eine Klemmscheibe, 4. ein Sekundärdichtelement, 5. ein weiteres Formgebungselement, 6. ein weiteres Dichtelement, 7. eine weitere Klemmscheibe.

Das Formgebungselement und das direkt daran anliegende Dichtelement verlaufen in einem radial äußeren Bereich vorzugsweise im Wesentlichen ausschließlich in radialer Richtung, sind in einem radial innenliegenden Bereich jedoch gekrümmt oder umgelenkt oder umgebogen, insbesondere in Richtung eines an das Dichtelement angrenzenden Sekundärdichtelements oder einer an das Dichtelement angrenzenden Klemmscheibe.

Bei der Verwendung mehrerer Formgebungselemente und mehrerer Dichtelemente kann vorgesehen sein, dass die radial innenliegenden Bereiche stets in dieselbe Richtung abgelenkt werden.

Es kann jedoch auch vorgesehen sein, dass mehrere Formgebungselemente und mehrere Dichtelemente in unterschiedliche Richtungen abgelenkt oder umgebogen sind.

Die Formgebungselemente und die Dichtelemente sind in dem radial innenliegenden Bereich dann insbesondere voneinander weg gerichtet.

Eine solche Dichtungsanordnung kann insbesondere ein Trägerelement umfassen, auf welchem ausgehend von einem Anlageabschnitt des Trägerelements nacheinander die folgenden Bauteile vorgesehen sind: 1. eine Klemmscheibe, 2. ein Dichtelement, 3. ein Formgebungselement, 4. ein Sekundärdichtelement, 5. ein weiteres Formgebungselement, 6. ein weiteres Dichtelement, 7. eine weitere Klemmscheibe.

Je nach Ausgestaltung einer Dichtungsanordnung, insbesondere abhängig von der Anzahl der an dem Trägerelement angeordneten Bauteile, kann ein Verklemmen der Bauteile zwischen zwei Anlageabschnitten vorgesehen sein.

Erfindungsgemäß ist die Verwendung einer Schweißverbindung zum Festlegen der Bauteile an dem Trägerelement vorgesehen. Insbesondere kann dies vorteilhaft sein, wenn eine relativ geringe Anzahl von Bauteilen an dem Trägerelement festzulegen ist, wodurch sich der Umformaufwand zur Ausbildung eines zweiten Anlageabschnitts stark erhöhen würde. Beispielsweise kann vorgesehen sein, dass eine Dichtungsanordnung, welche nur ein Formgebungselement, nur ein Dichtelement, nur ein Sekundärdichtelement und/oder nur eine Klemmscheibe, insbesondere in dieser Reihenfolge, aufweist, mittels einer Schweißverbindung an dem Trägerelement festgelegt ist.

Die Schweißverbindung ist eine stoffschlüssige Verbindung zwischen der Klemmscheibe und dem hohlzylindrischen Aufnahmeabschnitt des Trägerelements.

Das Trägerelement kann beispielsweise ein Metallbauteil sein.

Beispielsweise kann das Trägerelement gedreht, gezogen, gespritzt und/oder gestanzt werden.

Eine Klemmscheibe kann beispielsweise aus einem Metallmaterial gebildet sein.

Insbesondere kann vorgesehen sein, dass eine Klemmscheibe gedreht, gestanzt und/oder gespritzt ist.

Ein Sekundärdichtelement kann beispielsweise als eine Scheibe, als ein O-Ring und/oder als ein dosiertes Elastomermaterial, insbesondere als ein Dichtlack, ausgebildet sein.

Ein Formgebungselement kann beispielsweise aus einem metallischen Material gebildet sein.

Vorzugsweise ist ein Formgebungselement gedreht, gestanzt und/oder gespritzt.

Ein Dichtelement kann beispielsweise gedreht und/oder gestanzt sein. Ferner kann ein Dichtelement ein Spritzgussbauteil sein.

Das Dichtelement kann insbesondere an einer an der Welle anliegenden Anlagefläche mit einem Verschleißschuh, insbesondere einem Verschleißvorsprung und/oder mit einer Drallfunktion versehen sein.

Die Dichtungsanordnung kann insbesondere aus Bauteilen eines Bausatzes hergestellt werden.

Es handelt sich um einen Bausatz für eine erfindungsgemäße Dichtungsanordnung.

Der Bausatz umfasst vorzugsweise Folgendes:
mehrere unterschiedlich ausgebildete Dichtelemente;
mehrere Formgebungselemente zum Umformen und/oder Abstützen der Dichtelemente;
mehrere identisch ausgebildete Trägerelemente zur wahlweisen Aufnahme einzelner oder mehrerer der unterschiedlich ausgebildeten Dichtelemente sowie zur Aufnahme einzelner oder mehrerer Formgebungselemente, wobei die Trägerelemente jeweils einen hohlzylindrischen Aufnahmeabschnitt und einen ringscheibenförmigen Anlageabschnitt zum Festlegen von jeweils mindestens einem Dichtelement und mindestens einem Formgebungselement umfassen.

Dadurch, dass der Bausatz mehrere unterschiedlich ausgebildete Dichtelemente, mehrere Formgebungselemente und mehrere identisch ausgebildete Trägerelemente umfasst, können viele unterschiedliche Dichtungsanordnungen für unterschiedliche Anwendungen mit einer geringen Anzahl an separat herzustellenden Einzelbauteilen sowie mit hoher Flexibilität bereitgestellt werden.

Die Formgebungselemente können alle identisch ausgebildet sein.

Alternativ hierzu kann vorgesehen sein, dass der Bausatz unterschiedlich ausgebildete Formgebungselemente umfasst.

Günstig kann es sein, wenn der Bausatz ferner mehrere unterschiedlich ausgebildete Sekundärdichtelemente und/oder mehrere unterschiedlich ausgebildete Klemmscheiben umfasst.

Günstig kann es sein, wenn unterschiedlich ausgebildete Dichtelemente sich hinsichtlich des Materials, hinsichtlich einer Erstreckung in radialer Richtung nach innen gerichtet, hinsichtlich einer Materialstärke in axialer Richtung und/oder hinsichtlich einer Ausgangsform voneinander unterscheiden.

Günstig kann es sein, wenn unterschiedlich ausgebildete Sekundärdichtelemente sich hinsichtlich des Materials, hinsichtlich einer Erstreckung in radialer Richtung nach innen gerichtet, hinsichtlich einer Materialstärke in axialer Richtung und/oder hinsichtlich einer Ausgangsform voneinander unterscheiden.

Günstig kann es sein, wenn unterschiedlich ausgebildete Klemmscheiben sich hinsichtlich des Materials, hinsichtlich einer Erstreckung in radialer Richtung nach innen gerichtet, hinsichtlich einer Materialstärke in axialer Richtung und/oder hinsichtlich einer Ausgangsform voneinander unterscheiden.

Günstig kann es sein, wenn unterschiedlich ausgebildete Formgebungselemente sich hinsichtlich des Materials, hinsichtlich einer Erstreckung in radialer Richtung nach innen gerichtet, hinsichtlich einer Materialstärke in axialer Richtung und/oder hinsichtlich einer Ausgangsform voneinander unterscheiden.

Die Außendurchmesser der Dichtelemente, der Formgebungselemente, der Sekundärdichtelemente und/oder der Klemmscheiben sind vorzugsweise im Wesentlichen identisch ausgebildet, insbesondere um eine zuverlässige Aufnahme derselben an und/oder in den identisch ausgebildeten Trägerelementen zu ermöglichen.

Der erfindungsgemäße Bausatz weist vorzugsweise ferner einzelne oder mehrere der im Zusammenhang mit der erfindungsgemäßen Dichtungsanordnung beschriebenen Merkmale und/oder Vorteile auf.

Die vorliegende Erfindung betrifft ferner ein Verfahren zur Herstellung einer erfindungsgemäßen Dichtungsanordnung.

Der Erfindung liegt diesbezüglich die Aufgabe zugrunde, ein Verfahren bereitzustellen, mittels welchem eine Vielzahl unterschiedlicher Dichtungsanordnungen mit einer geringen Teileanzahl einfach und flexibel bereitstellbar ist.

Diese Aufgabe wird erfindungsgemäß durch ein Verfahren zur Herstellung einer erfindungsgemäßen Dichtungsanordnung gelöst, wobei das Verfahren die Merkmale des Anspruchs 5 umfasst.

Das erfindungsgemäße Verfahren weist vorzugsweise einzelne oder mehrere der im Zusammenhang mit der erfindungsgemäßen Dichtungsanordnung und/oder dem Bausatz beschriebenen Merkmale und/oder Vorteile auf.

Ein oder mehrere Formgebungselemente, ein oder mehrere Dichtelemente, ein oder mehrere Sekundärdichtelemente und/oder ein oder mehrere Klemmscheiben werden in das Trägerelement eingeschoben und an dem Trägerelement mittels einer Schweißverbindung festgelegt.

Erfindungsgemäß ist vorgesehen, dass das ringförmige Dichtelement und das Formgebungselement mittels einer Schweißverbindung, insbesondere mittels einer Laserschweißverbindung, an dem Trägerelement festgelegt sind, wobei die Schweißverbindung eine stoffschlüssige Verbindung zwischen der Klemmscheibe und dem hohlzylindrischen Aufnahmeabschnitt des Trägerelements ist.

Vorzugsweise werden aus mehreren unterschiedlich ausgebildeten Dichtelementen, aus mehreren unterschiedlich ausgebildeten Sekundärdichtelementen, aus mehreren unterschiedlich ausgebildeten Formgebungselementen und/oder aus mehreren unterschiedlich ausgebildeten Klemmscheiben verschiedene Kombinationen ausgewählt und zur Herstellung unterschiedlicher Varianten von Dichtungsanordnungen in identisch ausgebildete Trägerelemente eingebracht und daran festgelegt.

Einzelne oder mehrere Bestandteile der Dichtungsanordnung, insbesondere ein oder mehrere Dichtelemente, ein oder mehrere Sekundärdichtelemente, ein oder mehrere Formgebungselemente und/oder ein oder mehrere Klemmscheiben sind beispielsweise durch Druckumformen, Zug-Druckumformen, Zugumformen, Biegeumformen, Prägen, Stanzen, Spritzgießen, Druckgießen und/oder spanende Bearbeitung, insbesondere Drehen, herstellbar oder hergestellt.

Ein oder mehrere Formgebungselemente, ein oder mehrere Dichtelemente, ein oder mehrere Sekundärdichtelemente und/oder ein oder mehrere Klemmscheiben sind insbesondere jeweils unabhängig voneinander oder gemeinsam oder mittelbar mittels eines oder mehrerer weiterer Formgebungselemente, Dichtelemente, Sekundärdichtelemente und/oder Klemmscheiben an dem Trägerelement festgelegt oder festlegbar, insbesondere mittels einer formschlüssigen Verbindung, einer kraftschlüssigen Verbindung, einer Klebeverbindung und/oder einer (Laser-)Schweißverbindung.

Die Dichtungsanordnung umfasst vorzugsweise eine Ringscheibe.

Die Ringscheibe bildet insbesondere ein Formgebungselement und/oder eine Klemmscheibe.

Vorzugsweise ist ein als Ringscheibe ausgebildetes Formgebungselement und zusätzlich eine als Ringscheibe ausgebildete Klemmscheibe vorgesehen.

Die Ringscheibe ist insbesondere ein von dem ringförmigen Dichtelement und dem Trägerelement verschiedenes Bauteil der Dichtungsanordnung.

Günstig kann es sein, wenn die Ringscheibe ein Stanzteil, ein Ziehteil oder ein Spritzgussteil ist.

Die Ringscheibe ist vorzugsweise aus einem metallischen Material gebildet oder umfasst ein metallisches Material. Beispielsweise kann vorgesehen sein, dass die Ringscheibe aus Federstahl gebildet ist oder Federstahl umfasst.

Die Ringscheibe ist insbesondere als eine Federmembran oder Federplatine ausgebildet oder umfasst einen Federmembranabschnitt oder Federplatinenabschnitt.

Günstig kann es sein, wenn die Ringscheibe zumindest abschnittsweise federnd und/oder elastisch nachgiebig ausgebildet ist. Hierdurch kann insbesondere ein Rückstelleffekt erzielt werden.

Mittels der Ringscheibe können dann insbesondere im Betrieb und/oder bei der Benutzung der Dichtungsanordnung auftretende Druckschläge abgedämpft und/oder kompensiert werden.

Die Ringscheibe kann ferner beispielsweise aus einem Kunststoffmaterial gebildet sein oder ein Kunststoffmaterial umfassen. Insbesondere kann als Kunststoffmaterial ein Elastomermaterial vorgesehen sein.

Die Ringscheibe kann beispielsweise segmentiert sein, das heißt insbesondere in Umfangsrichtung regelmäßig oder unregelmäßig unterbrochen ausgebildet oder mit Einbuchtungen versehen sein.

Insbesondere kann eine solche segmentierte Ausgestaltung an einer radial innenliegenden und/oder an einer radial außenliegenden Seite der Ringscheibe vorgesehen sein.

Günstig kann es sein, wenn die Ringscheibe radial außenliegend segmentiert ist, wobei durch die segmentierte Ausgestaltung insbesondere federnd nachgiebige Anlageabschnitte, Halteabschnitte und/oder Rastabschnitte gebildet sind, wodurch die Ringscheibe insbesondere klemmend oder rastend an dem Trägerelement, insbesondere dem hohlzylindrischen Aufnahmeabschnitt des Trägerelements, festlegbar ist.

Die Ringscheibe kann insbesondere zumindest näherungsweise einen winkelförmigen Querschnitt aufweisen und/oder an einem radial äußeren Randbereich abgewinkelt sein.

Die Ringscheibe ist vorzugsweise in axialer Richtung an dem Trägerelement, insbesondere dem Aufnahmeabschnitt des Trägerelements, festlegbar.

Die Ringscheibe dient dann insbesondere als Klemmscheibe.

Es ist vorgesehen, dass die Klemmscheibe mit dem Aufnahmeabschnitt des Trägerelements verschweißt wird, beispielsweise durch Laserschweißen. Durch die Verwendung einer umlaufenden Schweißnaht kann vorzugsweise eine verbesserte innere statische Dichtheit im Bereich des Aufnahmeabschnitts des Trägerelements erzielt werden.

Alternativ hierzu kann vorgesehen sein, dass lediglich segmentweise und/oder punktweise und/oder abschnittsweise in Umfangsrichtung eine Schweißverbindung zwischen der Klemmscheibe und dem Trägerelement, insbesondere dem Aufnahmeabschnitt des Trägerelements, hergestellt wird. Insbesondere wenn die Klemmscheibe als segmentierte Ringscheibe ausgebildet ist, welche insbesondere radial außenliegend segmentiert ist, kann hierdurch vorzugsweise eine Federwirkung der Ringscheibe trotz der Schweißverbindung aufrecht erhalten werden .

Die Ringscheibe kann beispielsweise eine Wulst oder Nut aufweisen, welche insbesondere in Umfangsrichtung ringförmig umlaufend zwischen einem radial äußeren Rand und einem radial inneren Rand angeordnet ist.

Die Wulst oder Nut dient insbesondere als ein in axialer Richtung federnder Abschnitt der Dichtungsanordnung, insbesondere zur Optimierung einer Klemmwirkung und/oder zum Ausgleich von Fertigungstoleranzen.

Insbesondere dann, wenn als Material ein oder mehrere Kunststoffmaterialien zum Einsatz kommen, kann als Schweißverbindung eine Ultraschallschweißverbindung vorgesehen sein.

Beispielsweise dann, wenn eine als Kunststoff-Spritzgussbauteil vorgesehene Ringscheibe vorgesehen ist, kann diese vorzugsweise durch eine Schweißverbindung, insbesondere eine Ultraschallschweißverbindung, mit einem oder mehreren weiteren Kunststoff-Bauteilen der Dichtungsanordnung verbunden werden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Schnitt durch eine erste Ausführungsform einer Dichtungsanordnung;
- Fig. 2: eine der Fig. 1 entsprechende schematische Darstellung einer zweiten Ausführungsform einer Dichtungsanordnung;
- Fig. 3: eine der Fig. 1 entsprechende schematische Darstellung einer dritten Ausführungsform einer Dichtungsanordnung;
- Fig. 4: eine der Fig. 1 entsprechende schematische Darstellung einer vierten Ausführungsform einer Dichtungsanordnung; und
- Fig. 5: eine schematische Draufsicht auf eine Ringscheibe zur Verwendung in einer der Dichtungsanordnungen.

Die beanspruchte Erfindung basiert auf der vierten Ausführungsform der Dichtungsanordnung.

Gleiche oder funktional äquivalente Elemente sind in sämtlichen Figuren mit denselben Bezugszeichen versehen.

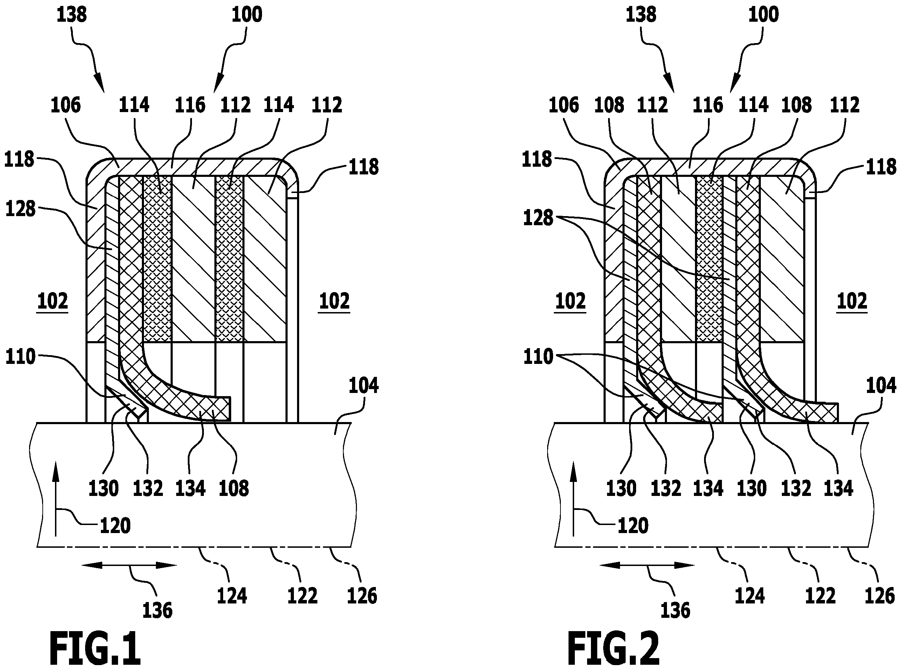

Eine in Fig. 1 dargestellte erste Ausführungsform einer als Ganzes mit 100 bezeichneten Dichtungsanordnung ist beispielsweise als ein Radialwellendichtring ausgebildet und dient zur Abdichtung zwischen zwei Aufnahmeräumen 102 zur Aufnahme zweier Medien im Bereich einer Welle 104.

Die Dichtungsanordnung 100 umfasst insbesondere ein Trägerelement 106, welches beispielsweise ein Gehäuse der Dichtungsanordnung 100 bildet.

Ferner umfasst die Dichtungsanordnung 100 vorzugsweise ein oder mehrere Dichtelemente 108, welche an dem Trägerelement 106 angeordnet und/oder festgelegt sind.

Ein Dichtelement 108 liegt im montierten Zustand der Dichtungsanordnung 100 insbesondere an der Welle 104 an, um die Dichtfunktion der Dichtungsanordnung 100 zu ermöglichen.

Das Dichtelement 108 ist hierzu insbesondere elastisch nachgiebig ausgebildet und gegen die Welle 104 vorgespannt.

Die Dichtungsanordnung 100 umfasst ferner ein Formgebungselement 110 zum Umformen und/oder Abstützen des Dichtelements 108.

Das Formgebungselement 110 ist insbesondere ein von dem Trägerelement 106 verschiedenes Element.

Zudem kann die Dichtungsanordnung 100 ein oder mehrere Klemmscheiben 112 und/oder ein oder mehrere Sekundärdichtelemente 114 aufweisen.

Ein oder mehrere Dichtelemente 108, ein oder mehrere Formgebungselemente 110, ein oder mehrere Klemmscheiben 112 und/oder ein oder mehrere Sekundärdichtelemente 114 sind vorzugsweise zumindest abschnittsweise kreisringscheibenförmig ausgebildet, wobei insbesondere ein jeweiliger Außendurchmesser im Wesentlichen identisch ausgebildet ist. Hierdurch sind die genannten Elemente 108, 110, 112, 114 einfach und zuverlässig in dem Trägerelement 106 aufnehmbar.

Das Trägerelement 106 umfasst hierzu insbesondere einen hohlzylindrischen Aufnahmeabschnitt 116, dessen Innendurchmesser im Wesentlichen dem Außendurchmesser der genannten Elemente 108, 110, 112, 114 entspricht.

Das Trägerelement 106 umfasst ferner mindestens einen Anlageabschnitt 118.

Der Anlageabschnitt 118 ist insbesondere im Wesentlichen kreisringscheibenförmig ausgebildet und grenzt in axialer Richtung 136 an eine Seite des hohlzylindrischen Aufnahmeabschnitts 116 an.

Insbesondere ragt der Anlageabschnitt 118 ausgehend von dem Aufnahmeabschnitt 116 des Trägerelements 106 in einer radialen Richtung 120 nach innen.

Die axiale Richtung 136 und die radiale Richtung 120 beziehen sich dabei insbesondere auf eine Längsmittelachse 122 der Welle 104 und/oder eine Rotationsachse 124 der Welle 104.

Die Längsmittelachse 122 und/oder die Rotationsachse 124 der Welle 104 sind vorzugsweise zugleich eine Symmetrieachse 126 der Dichtungsanordnung 100, insbesondere des Trägerelements 106, des Dichtelements 108, des Formgebungselements 110, der Klemmscheibe 112 und/oder des Sekundärdichtelements 114.

Das Formgebungselement 110 umfasst insbesondere einen ringscheibenförmigen Abschnitt 128, welcher insbesondere radial außenliegend angeordnet ist.

Ferner umfasst das Formgebungselement 110 einen schräg zur radialen Richtung 120 verlaufenden Abschnitt 130, welcher insbesondere radial innenliegend angeordnet ist und an den ringscheibenförmigen Abschnitt 128 angrenzt.

Der schräg verlaufende Abschnitt 130 ist insbesondere ein kegelstumpfmantelförmiger Abschnitt 132 des Formgebungselements 110.

Der schräg verlaufende Abschnitt 130 umgreift vorzugsweise das Dichtelement 108 abschnittsweise an dessen radial innenliegender Seite.

Insbesondere kann sich das Dichtelement 108 aufgrund des schräg verlaufenden Abschnitts 130 des Formgebungselements 110 an das Formgebungselement 110 anlegen und/oder von dem Formgebungselement 110 umgeformt und/oder vorgespannt und/oder verformt werden.

Das Formgebungselement 110 und das Dichtelement 108 sind insbesondere im Wesentlichen L-förmig oder J-förmig ausgebildet, insbesondere um eine federnde Anlage des radial innenliegenden Endes des Dichtelements 108 an der Welle 104 zu ermöglichen.

Das Dichtelement 108 ist dabei insbesondere ein Dichtlippenelement 134.

Bei der in Fig. 1 dargestellten ersten Ausführungsform der Dichtungsanordnung 100 sind bezüglich der axialen Richtung 136 ausgehend von einem Anlageabschnitt 118 des Trägerelements 106 folgende Bauteile der Dichtungsanordnung 100 aufeinanderfolgend angeordnet:
1. ein Formgebungselement 110;
2. ein Dichtelement 108;
3. ein Sekundärdichtelement 114;
4. eine Klemmscheibe 112;
5. ein weiteres Sekundärdichtelement 114;
6. eine weitere Klemmscheibe 112.

An diese weitere Klemmscheibe 112 schließt sich ein umgeformtes Ende des hohlzylindrischen Aufnahmeabschnitts 116 des Trägerelements 106 an. Dieses Ende bildet insbesondere einen weiteren Anlageabschnitt 118, so dass die genannten Bauteile 108, 110, 112, 114 zwischen zwei Anlageabschnitten 118 des Trägerelements 106 eingeklemmt sind.

Die Dichtungsanordnung 100 ist insbesondere aus einem Bausatz 138 zur Herstellung mehrerer verschiedener Dichtungsanordnungen 100 herstellbar.

Der Bausatz 138 umfasst hierzu vorzugsweise mehrere identisch ausgebildete Trägerelemente 106, welche unterschiedlich bestückbar sind, um verschiedene Ausführungsformen von Dichtungsanordnungen 100 herzustellen.

Beispielsweise können unter Verwendung identischer oder verschiedener Formgebungselemente 110, Dichtelemente 108, Klemmscheiben 112 und/oder Sekundärdichtelemente 114 Dichtungsanordnungen 100 zur Verwendung in Verbindung mit unterschiedlich dimensionierten und/oder bewegten Wellen 104 einfach hergestellt werden.

Vorzugsweise ist eine große Anzahl von Gleichteilen für den Bausatz 138 vorgesehen, um die Herstellungskosten der Dichtungsanordnungen 100 auch trotz einer großen Variantenvielfalt zu minimieren.

Eine in Fig. 2 dargestellte zweite Ausführungsform einer Dichtungsanordnung 100 unterscheidet sich von der in Fig. 1 dargestellten ersten Ausführungsform im Wesentlichen dadurch, dass die Dichtungsanordnung 100 zwei Dichtelemente 108 und zwei Formgebungselemente 110 umfasst.

Zudem ist lediglich ein Sekundärdichtelement 114 vorgesehen.

Ausgehend von einem Anlageabschnitt 118 sind die Elemente in axialer Richtung 136 wie folgt aufeinanderfolgend angeordnet:
1. ein Formgebungselement 110;
2. ein Dichtelement 108;
3. eine Klemmscheibe 112;
4. ein Sekundärdichtelement 114;
5. ein weiteres Formgebungselement 110;
6. ein weiteres Dichtelement 108;
7. eine weitere Klemmscheibe 112.

An die weitere Klemmscheibe 112 schließt sich dann der durch Umformen des hohlzylindrischen Aufnahmeabschnitts 116 des Trägerelements 106 gebildete weitere Anlageabschnitt 118 an.

Die beiden Formgebungselemente 110 und die beiden Dichtelemente 108 sind vorzugsweise in derselben axialen Richtung 136 umgelenkt und/oder umgebogen und/oder umgeformt, so dass insbesondere zwei in axialer Richtung 136 hintereinander angeordnete und/oder wirkende Dichtlippenelemente 134 gebildet sind.

Im Übrigen stimmt die in Fig. 2 dargestellte zweite Ausführungsform der Dichtungsanordnung 100 hinsichtlich Aufbau und Funktion mit der in Fig. 1 dargestellten ersten Ausführungsform überein, so dass auf deren vorstehende Beschreibung insoweit Bezug genommen wird.

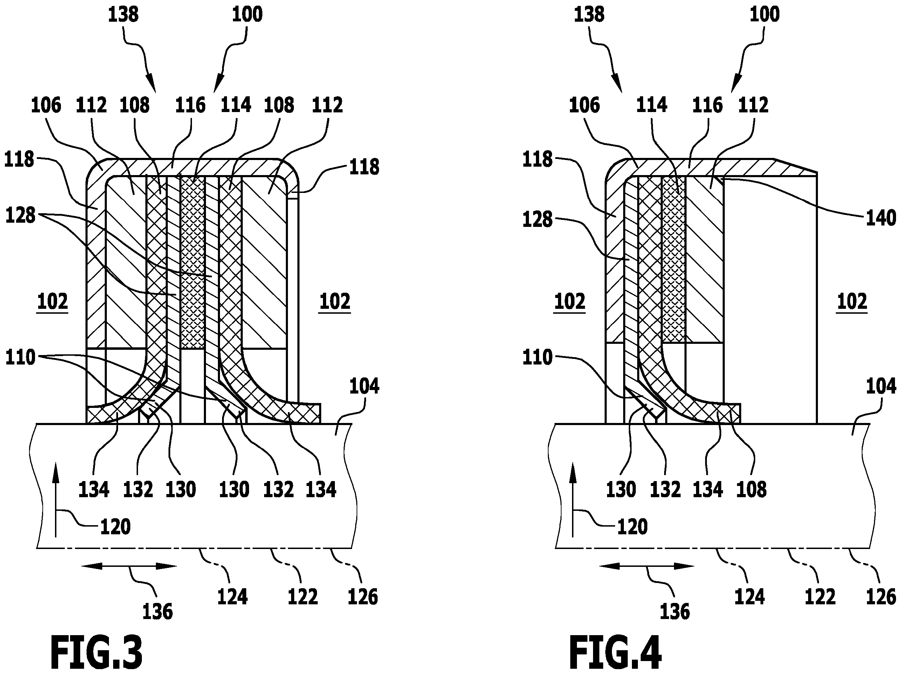

Eine in Fig. 3 dargestellte dritte Ausführungsform einer Dichtungsanordnung 100 unterscheidet sich von der in Fig. 2 dargestellten zweiten Ausführungsform im Wesentlichen dadurch, dass die Bauteile der Dichtungsanordnung 100 in unterschiedlicher Reihenfolge und/oder Ausrichtung in dem Trägerelement 106 angeordnet und/oder festgelegt sind.

Insbesondere sind die zwei Formgebungselemente 110 sowie die zwei Dichtelemente 108 jeweils voneinander weg gerichtet, umgeformt, verformt und/oder ausgelenkt.

Ausgehend von dem einen Anlageabschnitt 118 des Trägerelements 106 sind die Bauteile vorzugsweise in axialer Richtung 136 wie folgt aufeinanderfolgend angeordnet:
1. eine Klemmscheibe 112;
2. ein Dichtelement 108;
3. ein Formgebungselement 110;
4. ein Sekundärdichtelement 114;
5. ein weiteres Formgebungselement 110;
6. ein weiteres Dichtelement 108;
7. eine weitere Klemmscheibe 112.

Auch bei dieser Ausgestaltung der Dichtungsanordnung 100 ist erneut ein umgeformtes Ende des hohlzylindrischen Aufnahmeabschnitts 116 des Trägerelements 106 vorgesehen, um einen Anlageabschnitt 118 zur klemmenden Aufnahme der Bauteile an dem Trägerelement 106 zu bilden.

Im Übrigen stimmt die in Fig. 3 dargestellte dritte Ausführungsform der Dichtungsanordnung 100 hinsichtlich Aufbau und Funktion mit der in Fig. 2 dargestellten zweiten Ausführungsform überein, so dass auf deren vorstehende Beschreibung insoweit Bezug genommen wird.

Eine in Fig. 4 dargestellte vierte Ausführungsform der Dichtungsanordnung 100 unterscheidet sich von der in Fig. 1 dargestellten ersten Ausführungsform im Wesentlichen dadurch, dass lediglich ein Sekundärdichtelement 114 und lediglich eine Klemmscheibe 112 vorgesehen sind.

Eine Gesamterstreckung der im hohlzylindrischen Aufnahmeabschnitt 116 aufzunehmenden Bauteile der Dichtungsanordnung 100 ist in axialer Richtung 136 somit relativ gering. Dies würde bedeuten, dass ein relativ großer Bereich des hohlzylindrischen Aufnahmeabschnitts 116 umgeformt werden müsste, um den weiteren Anlageabschnitt 118 zum Festklemmen der Elemente 108, 110, 112, 114 herzustellen.

Anstelle der Umformung des Trägerelements 106 ist somit bei der in Fig. 4 dargestellten vierten Ausführungsform vorzugsweise eine Schweißverbindung 140 vorgesehen.

Mittels dieser Schweißverbindung 140 wird insbesondere die Klemmscheibe 112 stoffschlüssig an dem hohlzylindrischen Aufnahmeabschnitt 116 festgelegt.

Die Schweißverbindung 140 kann dabei beispielsweise eine Laserschweißverbindung sein.

Aufgrund der Festlegung der Klemmscheibe 112 an dem hohlzylindrischen Aufnahmeabschnitt 116 sind vorzugsweise auch die drei übrigen Elemente 108, 110, 114 fest an dem Trägerelement 106 gehalten.

Insbesondere sind das Formgebungselement 110, das Dichtelement 108 und das Sekundärdichtelement 114 dann zwischen den Anlageabschnitt 118 und die Klemmscheibe 112 eingeklemmt.

Im Übrigen stimmt die in Fig. 4 dargestellte vierte Ausführungsform der Dichtungsanordnung 100 hinsichtlich Aufbau und Funktion mit der in Fig. 1 dargestellten ersten Ausführungsform überein, so dass auf deren vorstehende Beschreibung insoweit Bezug genommen wird.

Bei weiteren (nicht dargestellten) Ausführungsformen von Dichtungsanordnungen 100 können vorzugsweise einzelne oder mehrere Merkmale und/oder Vorteile der vorstehend beschriebenen Ausführungsformen beliebig miteinander kombiniert sein.

Beispielsweise kann auch bei der in Fig. 2 dargestellten zweiten Ausführungsform der Dichtungsanordnung 100 zur Fixierung der an dem Trägerelement 106 angeordneten Bauteile eine Schweißverbindung 140 anstelle des weiteren Anlageabschnitts 118 vorgesehen sein.

Günstig kann es sein, wenn bei einer oder bei mehreren der Dichtungsanordnungen 100 eine Ringscheibe 200 zum Einsatz kommt.

Eine Ringscheibe 200 kann insbesondere ein Formgebungselement 110, eine Klemmscheibe 112 und/oder ein Sekundärdichtelement 114 sein, bilden oder umfassen.

Insbesondere können mehrere Ringscheiben 200 pro Dichtungsanordnung 100 vorgesehen sein.

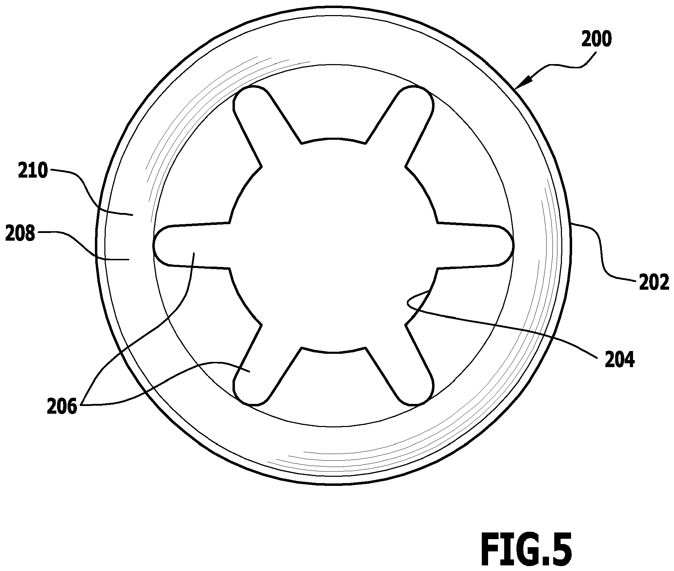

In Fig. 5 ist beispielhaft eine Ringscheibe 200 dargestellt.

Die Ringscheibe 200 weist einen kreisförmigen radial äußeren Rand 202 auf.

Ein radial innerer Rand 204 der Ringscheibe 200 ist vorzugsweise segmentiert ausgebildet, das heißt, dass beispielsweise mehrere Einbuchtungen 206 am radial inneren Rand 204 ausgebildet sind, welche eine im Übrigen kreisförmige Ausgestaltung des radial inneren Rands 204 unterbrechen.

Die Ringscheibe 200 ist somit radial innenliegend segmentiert ausgebildet.

Es kann jedoch auch alternativ oder ergänzend hierzu eine radial außenliegende segmentierte Ausbildung vorgesehen sein.

Die segmentierte Ausbildung dient insbesondere der einfacheren Verformbarkeit und/oder der optimierten Klemmwirkung und/oder der optimierten Kontaktierung.

Beispielsweise kann der schräg verlaufende Abschnitt 130 des Formgebungselements 110 segmentiert ausgebildet sein.

Ferner umfasst die Ringscheibe 200 eine Wulst 208 oder eine Nut 210, welche insbesondere in Umfangsrichtung kreisförmig umlaufend und geschlossen ausgebildet ist.

Die Wulst 208 oder Nut 210 bildet insbesondere einen Verformungsbereich zum gleichmäßigen axialen Anpressen der Ringscheibe 200 und/oder zum Ausgleich von Materialtoleranzen und/oder Fertigungsungenauigkeiten.

Die Ringscheibe 200 ist beispielsweise ein Tiefziehprodukt und/oder ein Stanzprodukt. Vorzugsweise ist die Ringscheibe 200 aus einem Metallmaterial gebildet oder umfasst ein Metallmaterial. Als Metallmaterial kann beispielsweise Federstahl vorgesehen sein.

Ferner kann vorgesehen sein, dass die Ringscheibe 200 ein Kunststoffbauteil ist, welches insbesondere ein Elastomermaterial umfasst oder hieraus gebildet ist. Die Ringscheibe 200 ist beispielsweise ein Spritzgussbauteil.

Die Ringscheibe 200 kann insbesondere zur einfachen Herstellung und/oder Montage der Dichtungsanordnung 100 beitragen, da die segmentierte Ausgestaltung eine verbesserte Klemmwirkung und/oder einen optimierten Toleranzausgleich ermöglicht. Das letztlich für die Dichtwirkung zuständige Dichtelement 108 kann hierdurch vorzugsweise effizient aufgenommen und festgelegt werden.

## Patentansprüche

1. Dichtungsanordnung (100) zur Abdichtung zwischen zwei Aufnahmeräumen (102) zur Aufnahme zweier Medien im Bereich einer Welle (104), umfassend:
- ein ringförmiges Dichtelement (108), welches im montierten Zustand zur Abdichtung an der Welle (104) anliegt;
- ein ringförmiges Trägerelement (106) zur Aufnahme des Dichtelements (108);
- ein von dem Trägerelement (106) verschiedenes Formgebungselement (110) zum Umformen und/oder Abstützen des Dichtelements (108), wobei
das Trägerelement (106) einen hohlzylindrischen Aufnahmeabschnitt (116) zur Aufnahme des Dichtelements (108) und des Formgebungselements (110) und einen Anlageabschnitt (118) umfasst, welcher in axialer Richtung (136) einseitig an den Aufnahmeabschnitt (116) angrenzt und sich ausgehend von dem Aufnahmeabschnitt (116) in radialer Richtung (120) nach innen erstreckt, **dadurch gekennzeichnet, dass** die Dichtungsanordnung (100) eine Klemmscheibe (112) zur Positionierung, Stabilisierung und/oder Festlegung des Dichtelements (108) und/oder des Trägerelements (106) umfasst, wobei das ringförmige Dichtelement (108) und das Formgebungselement (110) mittels einer Schweißverbindung (140), insbesondere mittels einer Laserschweißverbindung, an dem Trägerelement (106) festgelegt sind, wobei die Schweißverbindung (140) eine stoffschlüssige Verbindung zwischen der Klemmscheibe (112) und dem hohlzylindrischen Aufnahmeabschnitt (116) des Trägerelements (106) ist.

2. Dichtungsanordnung (100) nach Anspruch 1, **dadurch gekennzeichnet, dass** das Formgebungselement (110) das Dichtelement (108) zumindest abschnittsweise an einer in radialer Richtung (120) innenliegenden Seite des Dichtelements (108) umgreift.

3. Dichtungsanordnung (100) nach einem der Ansprüche 1 oder 2, **dadurch gekennzeichnet, dass** das Formgebungselement (110) einen ringscheibenförmigen Abschnitt (128) und einen schräg hierzu verlaufenden Abschnitt (130), insbesondere einen kegelstumpfmantelförmigen Abschnitt (132), umfasst, welcher sich in radialer Richtung (120) nach innen an den ringscheibenförmigen Abschnitt (128) anschließt.

4. Dichtungsanordnung (100) nach Anspruch 3, **dadurch gekennzeichnet, dass** das Dichtelement (108) mittels des schräg verlaufenden Abschnitts (130) des Formgebungselements (110) umgeformt, elastisch verformt und/oder vorgespannt ist.

5. Verfahren zur Herstellung einer Dichtungsanordnung (100) nach einem der Ansprüche 1 bis 4, wobei das Verfahren Folgendes umfasst:
Bereitstellen des Trägerelements (106);
Anordnen und Festlegen des Formgebungselements (110) und des Dichtelements (108) an dem Trägerelement (106), wobei das Formgebungselement (110) das Dichtelement (108) umformt und/oder abstützt, wobei das ein oder mehrere Formgebungselemente (110), das ein oder mehrere Dichtelemente (108), das ein oder mehrere Sekundärdichtelemente (114) und/oder die ein oder mehrere Klemmscheiben (112) in das Trägerelement (106) eingeschoben und an dem Trägerelement (106) festgelegt werden, wobei das eine oder die mehreren Formgebungselemente (110), das eine oder die mehreren Dichtelemente (108), das eine oder die mehreren
Sekundärdichtelemente (114) und/oder die eine oder die mehreren Klemmscheiben (112) mittels einer Schweißverbindung (140),
insbesondere mittels einer Laserschweißverbindung, an dem Trägerelement (106) festgelegt werden, wobei die Schweißverbindung (140) eine stoffschlüssige Verbindung zwischen der einen oder den mehreren Klemmscheiben (112) und dem hohlzylindrischen Aufnahmeabschnitt (116) des Trägerelements (106) ist.

6. Verfahren nach Anspruch 5, **dadurch gekennzeichnet, dass** aus mehreren unterschiedlich ausgebildeten Dichtelementen (108), aus mehreren unterschiedlich ausgebildeten Sekundärdichtelementen (114), aus mehreren unterschiedlich ausgebildeten Formgebungselementen (110) und/oder aus mehreren unterschiedlich ausgebildeten Klemmscheiben (112) verschiedene Kombinationen ausgewählt und zur Herstellung unterschiedlicher Varianten von Dichtungsanordnungen (100) in identisch ausgebildete Trägerelemente (106) eingebracht und daran festgelegt werden.

## Claims

1. Seal assembly (100) for sealing between two receiving chambers (102) for accommodating two media in the region of a shaft (104), comprising:
- an annular sealing element (108) which, in the assembled state, seals against the shaft (104);
- an annular carrier element (106) for accommodating the sealing element (108);
- a shaping element (110) different from the carrier element (106) for shaping and/or supporting the sealing element (108), wherein
the carrier element (106) comprises a hollow cylindrical receiving section (116) for accommodating the sealing element (108) and the shaping element (110), and a contact section (118) which adjoins the receiving section (116) on one side in the axial direction (136) and extends inwardly from the receiving section (116) in the radial direction (120), **characterized in that**
the seal assembly (100) comprises a clamping disc (112) for positioning, stabilizing, and/or fixing the sealing element (108) and/or the carrier element (106), wherein the annular sealing element (108) and the shaping element (110) are fixed to the carrier element (106) by means of a welding connection (140), in particular by means of a laser welding connection, wherein the welding connection (140) is a material-bonded connection between the clamping disc (112) and the hollow cylindrical receiving section (116) of the carrier element (106).

2. Seal assembly (100) according to claim 1, **characterized in that** the shaping element (110) at least partially engages around the sealing element (108) on an inner side of the sealing element (108) in the radial direction (120).

3. Seal assembly (100) according to any one of claims 1 or 2, **characterized in that** the shaping element (110) comprises a ring disc-shaped section (128) and a section (130) inclined thereto, in particular a truncated cone-shaped section (132), which connects radially inwardly to the ring disc-shaped section (128).

4. Seal assembly (100) according to claim 3, **characterized in that** the sealing element (108) is shaped, elastically deformed, and/or preloaded by means of the inclined section (130) of the shaping element (110).

5. Method for manufacturing a seal assembly (100) according to any one of claims 1 to 4, wherein the method comprises:
providing the carrier element (106);
arranging and fixing the shaping element (110) and the sealing element (108) to the carrier element (106), wherein the shaping element (110) shapes and/or
supports the sealing element (108), wherein the one or more shaping elements (110), the one or more sealing elements (108), the one or more secondary sealing elements (114), and/or the one or more clamping discs (112) are inserted into the carrier element (106) and fixed to the carrier element (106), wherein the one or more shaping elements (110), the one or more sealing elements (108), the one or more secondary sealing elements (114), and/or the one or more clamping discs (112) are fixed to the carrier element (106) by means of a welding connection (140), in particular by means of a laser welding connection, wherein the welding connection (140) is a material-bonded connection between the one or more clamping discs (112) and the hollow cylindrical receiving section (116) of the carrier element (106).

6. Method according to claim 5, **characterized in that** different combinations are selected from a plurality of differently designed sealing elements (108), a plurality of differently designed secondary sealing elements (114), a plurality of differently designed shaping elements (110), and/or a plurality of differently designed clamping discs (112) and introduced into identically designed carrier elements (106) for producing different variants of seal assemblies (100) and fixed thereto.

## Revendications

1. Ensemble d'étanchéité (100) pour l'étanchéité entre deux chambres de réception (102) destinées à recevoir deux milieux dans la région d'un arbre (104), comprenant :
- un élément d'étanchéité annulaire (108) qui, à l'état assemblé, assure l'étanchéité contre l'arbre (104) ;
- un élément support annulaire (106) destiné à recevoir l'élément d'étanchéité (108) ;
- un élément de mise en forme (110) différent de l'élément support (106) pour mettre en forme et/ou supporter l'élément d'étanchéité (108), dans lequel l'élément support (106) comprend une section de réception cylindrique creuse (116) destinée à recevoir l'élément d'étanchéité (108) et l'élément de mise en forme (110), et une section de contact (118) qui jouxte la section de réception (116) d'un côté dans la direction axiale (136) et s'étend vers l'intérieur à partir de la section de réception (116) dans la direction radiale (120), **caractérisé en ce que** l'ensemble d'étanchéité (100) comprend une rondelle de serrage (112) pour positionner, stabiliser et/ou fixer l'élément d'étanchéité (108) et/ou l'élément support (106), dans lequel l'élément d'étanchéité annulaire (108) et l'élément de mise en forme (110) sont fixés à l'élément support (106) par un raccord de soudage (140), en particulier par un raccord de soudage laser, dans lequel le raccord de soudage (140) est une liaison par matériau entre la rondelle de serrage (112) et la section de réception cylindrique creuse (116) de l'élément support (106).

2. Ensemble d'étanchéité (100) selon la revendication 1, **caractérisé en ce que** l'élément de mise en forme (110) englobe au moins partiellement l'élément d'étanchéité (108) sur un côté interne de l'élément d'étanchéité (108) dans la direction radiale (120).

3. Ensemble d'étanchéité (100) selon l'une quelconque des revendications 1 ou 2, **caractérisé en ce que** l'élément de mise en forme (110) comprend une section en forme de disque annulaire (128) et une section inclinée par rapport à celle-ci, en particulier une section en forme de tronc de cône (132), qui se raccorde radialement vers l'intérieur à la section en forme de disque annulaire (128).

4. Ensemble d'étanchéité (100) selon la revendication 3, **caractérisé en ce que** l'élément d'étanchéité (108) est mis en forme, déformé élastiquement et/ou précontraint au moyen de la section inclinée (130) de l'élément de mise en forme (110).

5. Procédé de fabrication d'un ensemble d'étanchéité (100) selon l'une quelconque des revendications 1 à 4, le procédé comprenant les étapes suivantes:
fourniture de l'élément support (106) ;
disposition et fixation de l'élément de mise en forme (110) et de l'élément d'étanchéité (108) sur l'élément support (106), dans lequel l'élément de mise en forme (110) met en forme et/ou supporte l'élément d'étanchéité (108), dans lequel un ou plusieurs éléments de mise en forme (110), un ou plusieurs éléments d'étanchéité (108), un ou plusieurs éléments d'étanchéité secondaires (114) et/ou un ou plusieurs rondelles de serrage (112) sont insérés dans l'élément support (106) et fixés à l'élément support (106), dans lequel un ou plusieurs éléments de mise en forme (110), un ou plusieurs éléments d'étanchéité (108), un ou plusieurs éléments d'étanchéité secondaires (114) et/ou un ou plusieurs rondelles de serrage (112) sont fixés à l'élément support (106) par un raccord de soudage (140), en particulier par un raccord de soudage laser, dans lequel le raccord de soudage (140) est une liaison par matériau entre la ou les rondelles de serrage (112) et la section de réception cylindrique creuse (116) de l'élément support (106).

6. Procédé selon la revendication 5, **caractérisé en ce que** différentes combinaisons sont sélectionnées parmi une pluralité d'éléments d'étanchéité (108) de conception différente, une pluralité d'éléments d'étanchéité secondaires (114) de conception différente, une pluralité d'éléments de mise en forme (110) de conception différente et/ou une pluralité de rondelles de serrage (112) de conception différente, puis introduites dans des éléments support (106) de conception identique pour produire différentes variantes d'ensembles d'étanchéité (100) et y être fixées.
